# EUROPEAN PATENT SPECIFICATION

(11) **EP 2 585 329 B1**
(45) Date of publication and mention of the grant of the patent: **16.11.2016**
(21) Application number: 11725770.9
(22) Date of filing: 20.06.2011
(51) Int. Cl.: B60K 15/077, B60K 15/03, B29C 33/00, B29C 41/20, B29C 65/00, F02M 37/00

(54) **PROCESS FOR MANUFACTURING A FUEL TANK EQUIPPED WITH A BAFFLE**
VERFAHREN ZUR HERSTELLUNG EINES MIT EINEM UMLENKBLECH AUSGESTATTETEN BRENNSTOFFTANKS
PROCESSUS DE FABRICATION D'UN RÉSERVOIR DE CARBURANT ÉQUIPÉ D'UNE CHICANE

(30) Priority: 23.06.2010 FR 1054997
(43) Date of publication of application: 01.05.2013
(73) Proprietor: Inergy Automotive Systems Research (Société Anonyme), 1120 Bruxelles (BE)
(72) Inventor: DE MAN, Pierre, 1090 Bruxelles (BE); BRETNACHER, Manuel, 57220 Ottonville (FR); WOUTERS, Paul, 1800 Vilvoorde (BE)
(74) Representative: Descazeaux, Charles
(86) International application number: PCT/EP2011/060184
(87) International publication number: WO 2011/161036

(56) References cited:
- EP-A1- 1 990 226
- DE-A1- 3 424 934
- US-A1- 2004 129 708

## Description

The present invention relates to a process for manufacturing a fuel tank equipped with an internal accessory and in particular a noise reduction baffle.

Fuel systems on board vehicles of various types generally comprise a tank for storing fuel, and this tank generally comprises at least one internal component. Conventionally, in the case of plastic tanks obtained by extrusion-blow moulding, such a component is introduced into and attached to the tank, after the manufacture of the latter, through an opening made in the wall of the tank. However, the passage through the wall of the tank must take into account the sealing requirements laid down by current environmental standards (LEV II and PZEV for example). For this purpose, the reduction in the number and size of the openings in the wall of the tank constitutes a favourable factor in reducing evaporative losses.

One particular case of such accessories is that of noise reduction baffles, the purpose of which is to absorb the noise ("slosh" noise) associated with the waves which may be generated inside the tank when the vehicle accelerates rapidly, brakes, turns, etc. Such baffles are also known as anti-slosh baffles.

In order to solve the problem of attaching them to the inside of a tank without having to make an opening/cut therein, it is known to introduce them into the tank at the same time as it is manufactured by extrusion of a tubular or two-part parison around such a baffle, and then by blow moulding the parison and by attaching the baffle to this parison.

However, this solution is often expensive and is not suitable for all types of vehicles. Moreover, sometimes existing tanks and/or tanks for which the design and tooling have been developed, and which have been equipped with a baffle according to the technology described above, do not meet the specifications of the manufacturer as regards noise emissions. It is then often more advantageous to insert an additional baffle (via "retrofitting") into the tank rather than to revise the entire design and tooling.

The more conventional solutions according to which the baffle is introduced after manufacture of the tank may, on the other hand, be suitable for the low cost vehicles and/or for retrofitting.

Application DE 19602818 describes a process according to which a baffle in the form of a rectangular sheet is introduced, via an opening that is also rectangular, into a tank in order to be inserted therein into a suitable relief (groove), the opening then being sealed by a part of the baffle itself or by a separate part. The drawback of this system is that the baffle has a size which is limited by the size of the orifice through which it is introduced.

To solve this problem, baffles of variable size have been considered, the size of which is smaller during the insertion and larger in service, this effect essentially being obtained by virtue of 2 basic principles :
- either the baffle is made of a compressible material (foam), as for example described in application JP 2006-218924 ; this has, as drawbacks, a certain weakness in the attachment to the tank (coupling between a rigid part and a foam) and also a relatively high cost (since standard foams, for example made of PUR, do not have good fuel resistance, it is indeed necessary to select more expensive materials such as fluorinated or silicone-based materials) ;
- or the baffle is provided with moveable parts that can be retracted during the insertion, as for example described in application US 2002/0185492, which has, as drawbacks, the fact that additional handling operations are required (in order to retract and redeploy the moveable parts), that the mechanisms imparting the mobility may pose problems (be trapped) and again, a relatively high cost (the baffle being obtained by assembling many pieces). Application EP1 990 226 A1 showing the features of the preamble of claim 1, also discloses such a mounting method for a baffle that comprises two moveable parts coupled together through a coupling portion.

The present application aims at solving these problems and at providing a simple and economical solution to the problem of having a baffle of large size (surface area) that can be introduced via an orifice of limited size into the tank and this with a limited number of simple and easy manipulations.

For this purpose, the present invention relates to a process for manufacturing a fuel tank equipped with a baffle comprising an attachment part and an offset part, both made of an incompressible material and being of fixed size and shape, said process comprising the following steps :
- a fuel tank comprising a wall is manufactured ;
- an opening is made in this wall ;
- through this opening, the baffle is introduced into the tank ;
- the baffle is attached to the wall of the tank via its attachment part;
   this process being characterized in that the offset and attachment parts together describe a fixed angle, in that the baffle has a fixed shape and in that when it is being introduced into the tank, the baffle must be rotated in order to be able to pass through the opening.

The term "fuel tank" is understood to mean an impermeable tank that can store fuel under diverse and varied environmental and usage conditions. An example of this tank is that with which motor vehicles are equipped.

According to the invention, the fuel tank is delimited by a wall, preferably a plastic wall, generally comprising an internal surface on its concave part and an external surface on its convex part.

The term "plastic" is understood to mean any material comprising at least one synthetic resin polymer.

All types of plastic may be suitable. Particularly suitable are plastics that belong to the category of thermoplastics.

In particular, polyolefins, thermoplastic polyesters, polyketones, polyamides and copolymers thereof may be used. A blend of polymers or copolymers may also be used ; similarly it is also possible to use a blend of polymer materials with inorganic, organic and/or natural fillers such as, for example but non-limitingly : carbon, salts and other inorganic derivatives, natural fibres or polymer fibres. It is also possible to use multilayer structures consisting of stacked layers bonded together, comprising at least one of the polymers or copolymers described above.

One polymer often employed is polyethylene. Excellent results have been obtained with high-density polyethylene (HDPE).

Preferably, the tank for which the process according to the invention is intended has a multilayer structure comprising at least one layer of a thermoplastic and at least one additional layer which, advantageously, may consist of a material that is a barrier to liquids and/or gases.

Preferably, the nature and the thickness of the barrier layer are chosen so as to minimize the permeability of the liquids and gases in contact with the wall of the tank. Preferably, this layer is based on a barrier material, i.e. a fuel-impermeable resin such as, for example, EVOH (a partially hydrolysed ethylene/vinyl acetate copolymer). Alternatively, the tank may be subjected to a surface treatment (fluorination or sulphonation) for the purpose of making it impermeable to the fuel.

Multilayer tanks comprising an EVOH-based inner layer and HDPE-based outer layers are particularly suitable within the context of the invention.

According to the invention, when the tank is made of plastic, it is preferably obtained by moulding a parison. The term "parison" is understood to mean a preform, generally of a single part or made of two parts, generally extruded and of substantially tubular shape (if made of one part) or in the form of sheets (if made of two parts), which is intended to form the wall of the tank after moulding, i.e. after an operation which consists in forming the parison, which is in the melt state, into the required shapes and dimensions using the mould in order to obtain a tank. Generally, this forming is carried out by blow moulding (by injecting a pressurized gas into the parison) and/or by thermoforming (by sucking the parison against the walls of the mould creating a vacuum).

The term "baffle" is understood within the context of the invention to mean a noise reduction baffle as described previously, and having a fixed shape i.e. not changeable without damaging the baffle. This means that in particular, this baffle does not comprise movable parts so that its shape and size are identical before, during and after its introduction and fixation into the tank. Compared to a baffle with moveable parts, the baffle of the invention, having no parts able to move relative one to another, presents the advantage of an easier and quicker mounting, a step of fixing the different movable parts together not being required.

According to the invention, it comprises an attachment part (i.e. a part having an end that is used to attach the baffle to the tank around the opening through which the baffle was inserted and preferably, in a way such as to cover and close at least partially said opening) and an offset part (i.e. the projection of which on the wall of the tank comprising the opening is located at least partly outside of said opening) which has a fixed size and a fixed shape (which cannot be modified permanently and lastingly, without damaging the baffle) and which are made of an incompressible material, i.e. a material having a volume that does not vary or that varies very little when a stress is applied thereto. Preferably, the baffle according to the invention is based on one and the same material. Preferably, it is a plastic and in a very particularly preferred manner, the same plastic as that forming the tank (or a material that is compatible with this (at least over its outer surface which, by means of a suitable shape and a suitable size respectively of the end of the attachment part and of the opening in the tank, makes it possible to weld said end to the perimeter of the tank). It is therefore, advantageously, a baffle made of high-density polyethylene (HDPE).

Preferably, the baffle has a thickness that is substantially constant and small relative to its other dimensions. This is understood to mean that it preferably has substantially the shape of a sheet having two major surfaces (of larger size) that are parallel and that are joined together via an edge that is generally substantially perpendicular thereto (but which may be curved of bevelled), without wishing to exclude the presence of parts/zones of larger thickness (such as, for example, stiffening ribs) and/or holes. The variant according to which the baffle has holes/perforations is furthermore advantageous because it allows fuel to pass through the baffle. It should also be noted that this sheet is not necessarily solid but it may be hollow (have the form of a shell as it were) and that the hollow that it contains may optionally be filled by an absorbent material (filter).

According to the invention, the offset part and the attachment part together describe a fixed angle, i.e. an angle that cannot be modified permanently and lastingly, without damaging the baffle. Preferably, the baffle (or at least its shell in the case of a hollow baffle as described above) is moulded in one piece and is made of a material that is optionally slightly flexible but that does not make it possible to modify the angle between the offset and attachment parts as explained above.

According to the invention, the angle may be such that the two (offset and attachment) parts are or are not in one and the same plane. In other words, there are essentially two preferred variants of the invention when the baffle is a single-material baffle moulded in one piece :
- either the major surfaces of its two parts, which run straight on from one another, are located (respectively looking at, in pairs, the upper and lower surfaces of the sheet) in planes that define an angle between them ; or in other words : the sheet is twisted and has a (partially) helical shape;
- or these surfaces are in one and the same plane (or in other words : the sheet is flat) but the sheet has a bent shape (a bit like a wing).

Whether the baffle is "helical" and/or flat and bent, the envelope of its projection on a plane parallel to the offset part is preferably predominantly constituted by the projection of the offset part.

Generally, the part of the baffle that essentially attenuates noise is the offset part and it is preferably positioned in the tank with its major surfaces perpendicular to the movement (flow) of the fuel considering the way in which the tank will be mounted in the vehicle.

According to the invention, an opening is made in the wall of the tank in order to be able to insert the baffle therein. This opening may be cut (by machining) into the tank once the latter has cooled and been demoulded. However, given the advantage (in terms of surface area occupied) imparted by a rectangular or oblong opening (see below), and the fact that a cut of this shape is more difficult to produce industrially than a circular cut (indeed it must generally be carried out by hand), this opening is advantageously produced during the moulding of the tank, by virtue of a device incorporated into the mould.

Indeed, the process according to the invention generally uses a mould that comprises cavities, i.e. sorts of hollow half-shells, the perimeters of which are identical and the internal surface of which is provided with a relief that corresponds to the external shape of the tank, the tank being moulded by pressing the parison against this surface using a pressurized gas injected into the parison, generally by means of a blow pin and/or by drawing a vacuum behind these cavities (see above).

According to this variant of the invention, the mould cavities comprise a moveable part provided with a blade or sharp relief capable of pressing locally on the parison until the opening is cut therein. This sharp relief generally has a shape suitable for cutting an orifice of rectangular or oblong shape in the wall of the tank. Preferably, this shape is also suitable for firstly thinning the parison, then cutting it. Preferably, the moveable part is also suitable for being able to pinch the cut (excised) material, to remove it from the opening when it retracts after cutting and to keep it in the mould until the tank is demoulded.

It should be noted that, optionally, a moveable part that makes it possible just to thin the parison in order to more easily perform a cut by hand (on the cooled and demoulded tank) is also advantageous within the context of the invention.

Advantageously, the moveable part has, around the sharp relief, a surface having a relief suitable for giving the perimeter of the opening a shape that facilitates the attachment of the baffle. This shape is advantageously that of a rectangular or oblong rib, surrounding the edges of the opening while leaving a (rectangular or oblong) ring of material that makes it possible to rest thereon an attachment plate fastened to the end of the attachment part of the baffle. Preferably, this plate is (as its name indicates) substantially flat and perpendicular to the major surfaces of said attachment part so that, when the plate is deposited on the aforementioned ring, it will at least partly seal the opening.

Preferably, when a single baffle is inserted via and attached to the perimeter of the opening, this plate will completely cover (seal) the opening. And when two or more baffles are introduced via and attached to the perimeter of the opening, their plates have complementary shapes and dimensions enabling the set of plates to seal said opening.

When there are several baffles and several plates, the latter are advantageously provided with interlocking zones in order to hold them in place before/during their attachment to the tank. Alternatively, the plates may be provided with clips for attachment to the edge of the opening.

The aforementioned plate(s) may be attached directly to the wall of the tank, for example by welding. For this purpose, they are advantageously provided with welding platforms or protuberances of material in the weld zone. Alternatively or in addition, a sheet acting as a cap may be welded over the plate(s), for example to the aforementioned rib. The variant where the plate(s) are not welded but are covered by a welded cap (or cap attached in a different leaktight manner) enables the baffle(s) to be produced from a material different to that constituting the tank.

The fact of affixing a spring or another component that absorbs vibrations between the plates and the cap, or of imparting a certain flexibility to the plates themselves, may be advantageous for reducing the vibrations (and the associated noise emissions) that may be generated as a result of the clearances (manufacturing tolerances) between the various parts.

As mentioned above, the opening is preferably of elongated shape and in a very particularly preferred manner, of a shape and size substantially matching (leaving sufficient clearance to enable the insertion) that of the cross section of the baffle, i.e. rectangular or oblong, so as to reduce the size thereof to a minimum.

Irrespective of the way in which the opening is cut (during or after moulding), the excised material is preferably ground and reused in a following production run (batch), in a layer known as a "regrind" layer that is conventionally present in plastic fuel tanks.

According to the invention, in order to be able to introduce the baffle into the tank and attach it in its service position, it is necessary to give it a rotational movement during its insertion through the opening. This is understood to mean that the size and shape of the baffle are such that it cannot simply be slid (via a simple linear movement) inside the tank through the opening but that it is necessary either to make it rotate on itself by applying pressure about its axis, or that it is necessary to make it pivot when it is inserted.

Generally, when the baffle is "helical", the opening is made in a lateral part of the wall of the tank (substantially vertical when the tank is mounted in the vehicle) and it is of elongated shape and substantially horizontal when the tank is mounted on the vehicle. In this variant, during insertion, the baffle is generally rotated such that its offset part moves from a horizontal position to a vertical position in service. This variant makes it possible to introduce into the tank and to securely attach thereto, a baffle, the height of which is substantially equal to that of the tank. Moreover, a weld over a vertical opening in the lateral wall of the tank would involve having to weld :
- over the "pinch" zone (peripheral weld), which would give a poor-quality weld ;
- over a zone of variable thickness, the thickness decreasing from the pinch zone to the edges.
Finally, since the deformation of the wall is smaller in this (horizontal) direction, the attachment is less subject to stress.

In this variant, the free end of the baffle in its offset part is preferably also attached to the tank. In one particularly advantageous variant, this end comprises a recess that will match a relief in or a component attached to the tank. When the tank comprises a "kiss point" (or local weld of the lower and upper parts of the wall of the tank over a generally circular zone), the recess is arc-shaped and encircling a part of the kiss point.

Generally, when the baffle is flat and bent, it is introduced via an opening in a horizontal part of the wall of the tank (when the latter is mounted in the vehicle) and preferably, in the upper part of the wall of the tank. In this variant, during insertion, the baffle is rotated (pivoted) essentially in one and the same plane and so that the axis of its offset part moves from a vertical position at the start of insertion, to a horizontal position in service.

In this variant, there are preferably two baffles which are introduced via the same opening. Preferably, this opening is located centrally in the part of the tank that it is desired to be soundproof.

Very particularly preferably, when two baffles are introduced via the same opening:
- either these baffles are attached at 180° to one another, i.e. at the same height, with their major surfaces in parallel planes and with their offset parts extending in opposite directions ;
- or these baffles have a shape, a size and a location such that their offset parts are located one on top of the other; generally, one of the baffles has an attachment part that is longer than that of the other baffle and the two attachment parts are parallel and side by side ; this variant is advantageous in the case of tall and narrow tanks.

Another advantageous variant is that where one baffle is introduced via an opening in the upper part of the wall of the tank and a 2^{nd} baffle is introduced via an opening in the lower part of the wall of the tank, these baffles being provided with complementary reliefs enabling them to be attached to one another. Such a variant has the advantage of increasing the mechanical strength of the tank and in particular, its pressure resistance, which has a particular advantage for the tanks of hybrid vehicles.

The objective of Figures 1 to 6 is to illustrate certain concrete aspects of the invention, without wishing to restrict the scope thereof in any way.

The objective of Figures 1 to 4 is to illustrate the principle of a process according to a first preferred variant of the invention, with wing-shaped baffles ; Figures 5 and 6 illustrate the principle of a process according to a second preferred variant of the invention, with a helical baffle.

Respectively, they show :

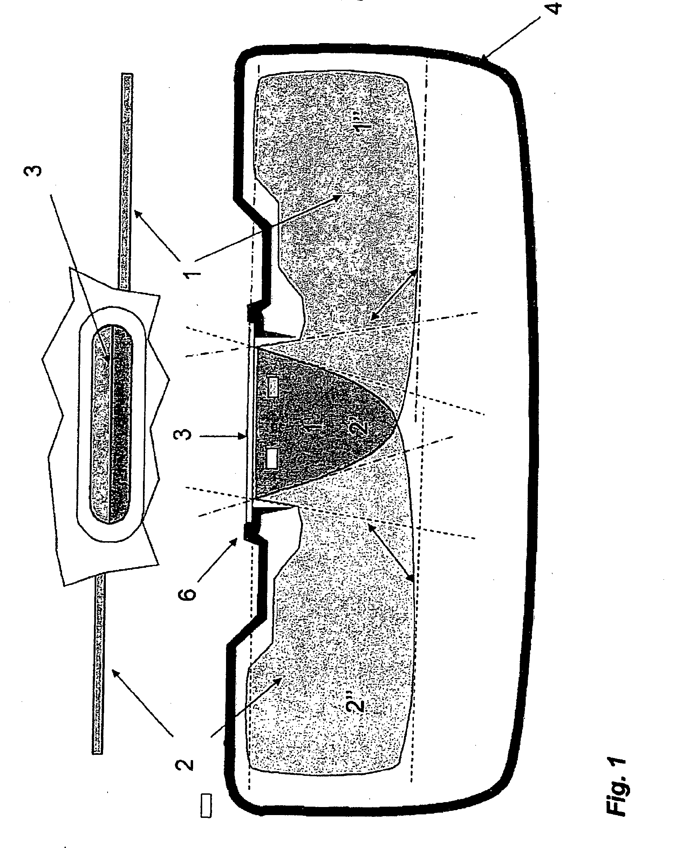

- Fig. 1 : a schematic cross-sectional view of a fuel tank through a vertical plane passing through an attachment opening (6) in its wall (4), this tank being in the process of being manufactured by a process according to the 1^{st} variant mentioned above;

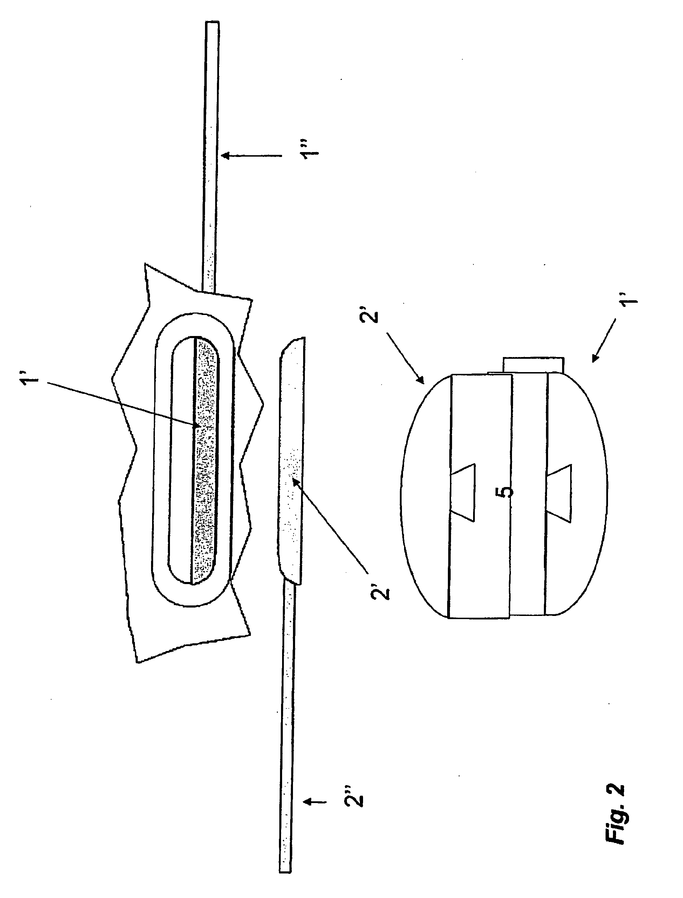

- Fig. 2 : schematic views of the attachment parts of the baffles (1, 2) from Figure 1 ;

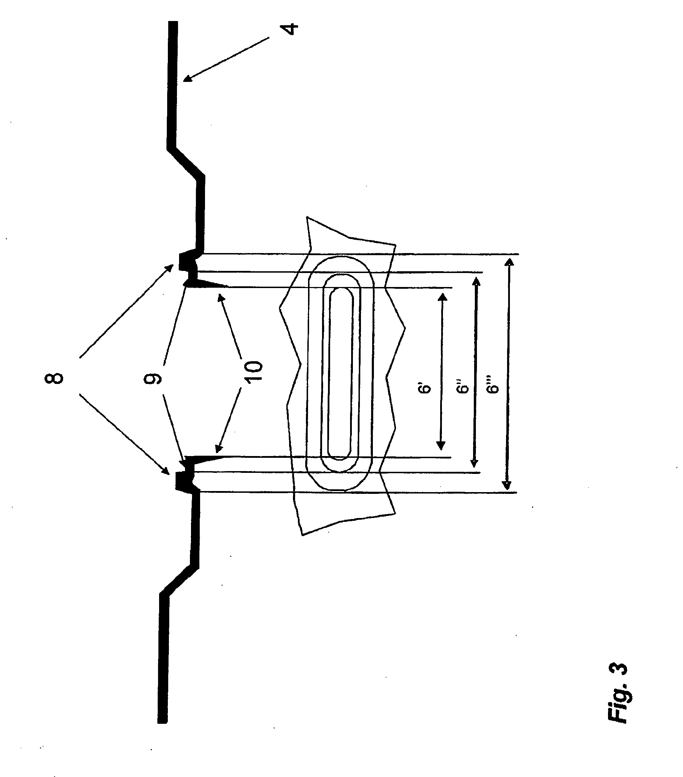

- Fig. 3 : schematic views of the opening (6) from Figure 1, namely cross-sectional and top views;

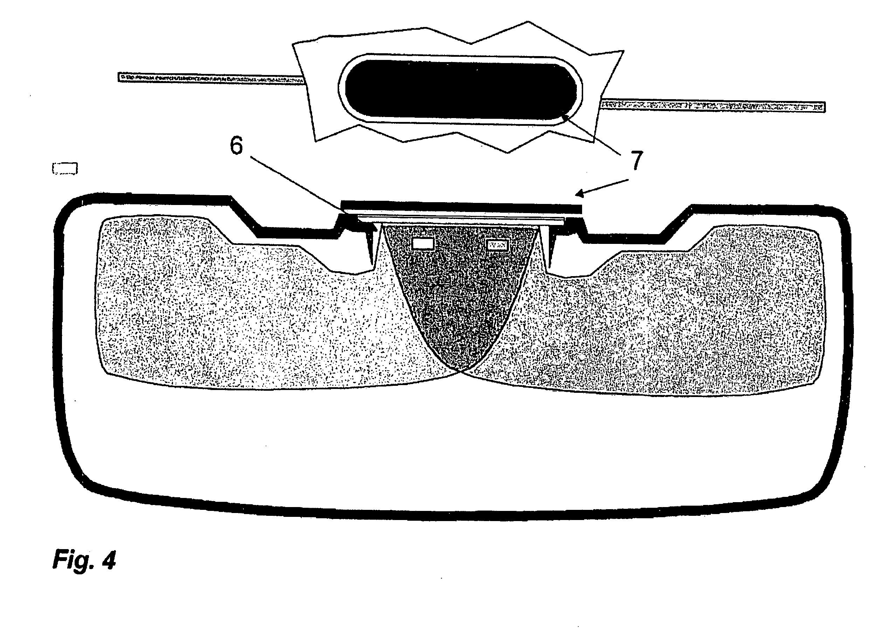

- Fig. 4 : the tank from Figure 1 where a cap (7) has been deposited in order to seal the opening (6) ;

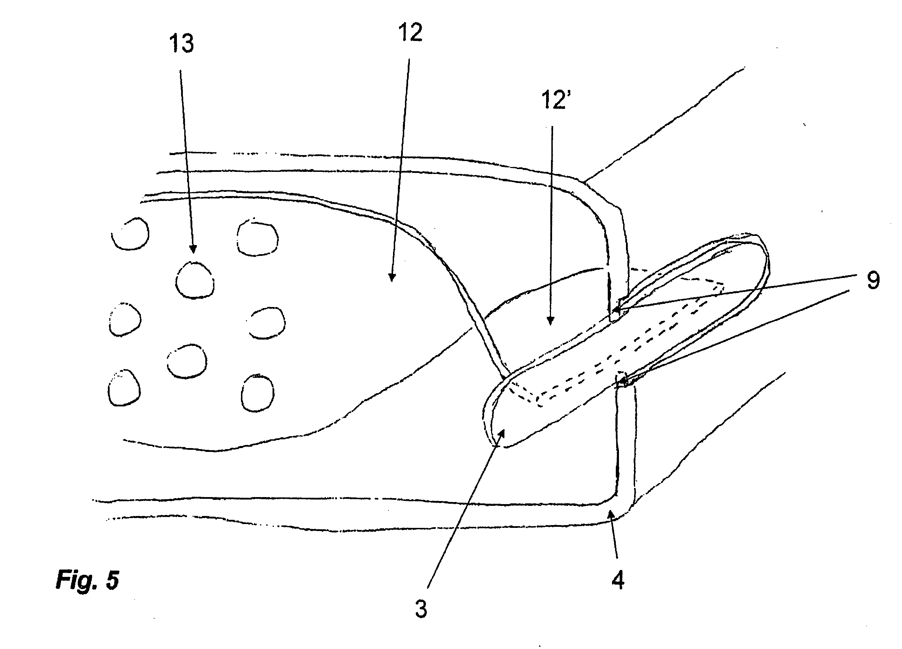

- Fig. 5 : a schematic cross-sectional view of a fuel tank through a vertical plane passing through an attachment opening (6) in its wall (4), this tank being in the process of being manufactured by a process according to the second variant mentioned above ; the wall (4) of the tank has been cut away up to the middle of the opening (6) but the baffle (12) has been left intact;

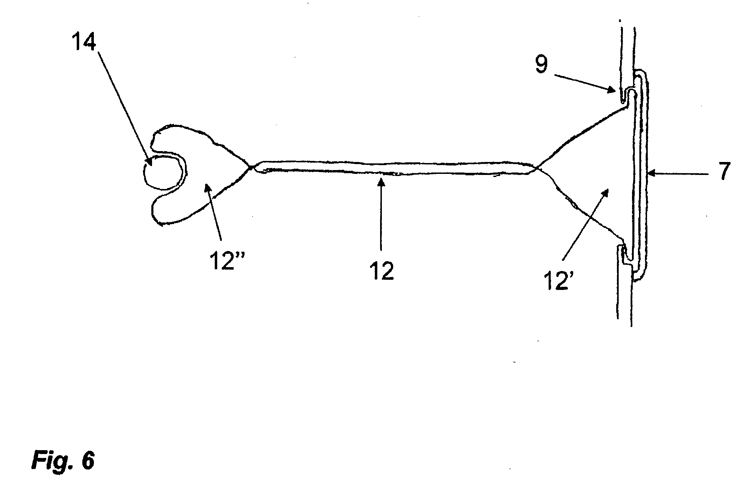

- Fig. 6 : a schematic top view of the finished tank from Figure 5 (where the opening (6) is sealed by a cap (7)) but that has been cut away horizontally to remove the cover (upper part) therefrom.

In these figures identical numbers illustrate identical or similar components.

In Figure 1, it can be seen how two baffles (1, 2) each comprising an attachment part (1', 2') forming an attachment plate (3) and an offset part (1", 2"), are lodged via their plate (3) over the perimeter of the opening (6). Just above, a schematic top view of the baffles (1,2) and of their plate (3) resting on the opening (therefore not visible) has been represented.

Also represented by dashes (baffle 2) and by alternations of dashes and dots (baffle 1), are the envelopes of the attachment parts (1', 2') and of the offset parts (1", 2"), in order to show what is meant by the fact that they form an angle between them (indicated by the arrows on each of the baffles).

In Figure 2, it can be seen that in place of a simple "smooth" complementary geometry as illustrated in the upper diagram (which corresponds to the case from Figure 1), it may be advantageous to provide a complementary relief (for example of dovetail shape (5), as illustrated in the lower diagram) in order to hold the parts during the welding thereof and/or during the welding of a sheet acting as a cap on top (see 7 in Figure 4). It should be noted that, alternatively, the plates could be provided with clips for attachment to the edge of the opening.

In Figure 3, the opening 6 has been represented in detail, as a cross-sectional view (upper diagram) and as a top view (lower diagram). In the top view, 3 concentric oblong reliefs are distinguished with respective lengths 6', 6" and 6"', which correspond respectively to the edges of the opening (10), to the end of a plate/ring of material (9) and to the end of a rib (8) surrounding this plate. The edges of the opening (10) point downwards, geometry resulting from the fact that the blade has gradually deformed and thinned the parison in order to be able to cut the opening without damaging the neighbouring part of the parison.

Figure 4 shows the provision of a cap (7), which is a sheet of material of suitable shape and size to be able to be welded to the rib and to thus seal the opening (6) in a leaktight manner.

In the variant illustrated in these figures, the size of the attachment parts (1', 2') and offset parts (1", 2") and also the angle between them (1' and 1", and 2' and 2" respectively) have been adapted in order to allow the complete insertion of the bent (wing-shaped) baffles into the tank. At the start of the insertion, the offset parts (1", 2") are substantially vertical and at the end of the insertion (and in service), they are substantially horizontal.

In a 2^{nd} variant that is the subject of Figures 5 and 6, the baffle (12) is in fact a helical baffle having a horizontal attachment part (12'), parallel to the lateral opening (6) through which it was introduced, and finishing in a plate (3) that rests on a ring of material (9) surrounding the opening ; and a predominantly vertical offset part, comprising openings (13) to allow fuel to pass through, and finishing with a new horizontal portion (12"), to enable it to be attached around a component or a kiss point (14) in the tank.

During its insertion through the opening (6), this baffle (12) was rotated 180° on itself (or was subjected to two consecutive rotations of 90° in two opposite directions) in order each time to align the axis of the section passing through with the axis of the opening (6). Therefore, the central part (12), which is most active in terms of soundproofing, moved from a vertical position (when the part (12") was passing through the opening), to a horizontal position (when it actually cleared the opening) then again to a vertical position, which is its final position, maintained by attachment of the part (12') to the wall (4) of the tank.

## Claims

1. - Process for manufacturing a fuel tank equipped with a noise reduction baffle (1, 2;12) comprising an attachment part (1', 2';12') and an offset part (1", 2"), both made of an incompressible material, said process comprising the following steps :
- a fuel tank comprising a wall (4) is manufactured ;
- an opening (6) is made in this wall (4) ;
- through this opening (6), the baffle (1, 2; 12) is introduced into the tank ;
- the baffle (1, 2;12) is attached to the wall (4) of the tank via its attachment part (1', 2';12') ; whereby
- when the baffle (1;2;12) is being introduced into the tank, it (1, 2;12) must be rotated in order to be able to pass through the opening (6);
this process being **characterized in that** the attachment part (1', 2';12') has an end that is used to attach the baffle(1, 2; 12) to the tank around the opening(6) through which the baffle was inserted, **in that** a projection of the offset part (1", 2") on the wall(4) of the tank comprising the opening(6) is located at least partly outside of said opening(6), **in that** the offset and attachment parts (1', 2';12') together describe a fixed angle and, **in that** the baffle has a fixed size and shape.

2. - Process according to the preceding claim, in which the baffle (1, 2;12) and the tank are based on the same plastic or on compatible plastics.

3. - Process according to either one of the preceding claims, in which the baffle (1, 2; 12) has substantially the shape of a sheet having two major surfaces that are parallel and that are joined together via an edge that is generally perpendicular thereto.

4. - Process according to the preceding claim, in which the sheet has holes or perforations (13) to allow the passage of fuel.

5. - Process according to either one of Claims 3 and 4, in which the sheet is a single-material sheet, moulded in one piece and has its major surfaces in the offset and attachment parts (1', 2';12') :
- either in planes that define an angle between them, the sheet describing a helical shape ;
- or in one and the same plane, the sheet having a bent shape.

6. - Process according to any one of the preceding claims, **characterized in that** the part of the baffle (1, 2;12) that essentially attenuates noise is the offset part (1",2") and **in that** it is positioned in the tank with its major surfaces perpendicular to the movement of the fuel considering the way in which the tank will be mounted in the vehicle.

7. - Process according to any one of the preceding claims, **characterized in that** the tank is moulded from a parison and **in that** the opening (6) is made during the moulding by virtue of a device incorporated into the mould.

8. - Process according to the preceding claim, in which the mould comprises a moveable part provided with a sharp rectangular or oblong relief that presses locally on the parison until the opening is cut therein, this sharp relief being surrounded by a surface comprising a rectangular or oblong rib (8), surrounding the edges of the opening while leaving a ring of material (9) on which an attachment plate (3) fastened to the end of the attachment part (1', 2';12') of the baffle will rest.

9. - Process according to the preceding claim, **characterized in that** when a single baffle (1, 2;12) is inserted via and attached to the perimeter of the opening (6), this plate (3) will completely cover the opening (6), and when two or more baffles (1, 2;12) are introduced via and attached to the perimeter of the opening (6), their plates have complementary shapes and dimensions enabling the set of plates (3) to seal said opening (6).

10. - Process according to the preceding claim, **characterized in that** the plate or plates (3) are attached to the wall (4) of the tank by welding and/or **in that** a sheet is affixed over the plate(s) and welded to the rib (8).

11. - Process according to any one of the preceding claims, **characterized in that** the baffle (12) is helical, **in that** the opening (6) is made in a lateral part of the wall of the tank, said lateral part being substantially vertical when the tank is mounted in the vehicle, **in that** this opening has an elongate shape the long axis of which is substantially horizontal when the tank is mounted in the vehicle and **in that**, during insertion, the baffle (12) is rotated such that its offset part moves from a horizontal position to a vertical position in service.

12. - Process according to the preceding claim, **characterized in that** the free end of the baffle (12) in its offset part comprises a recess which will match a relief or a component attached to the tank.

13. - Process according to the preceding claim, **characterized in that** the tank comprises a kiss point (14), and **in that** the recess is arc-shaped encircling a part of the kiss point (14).

14. - Process according to any one of Claims 1 to 10, **characterized in that** the baffle (1,2) is flat and bent, **in that** it is introduced via an opening (6) in the upper part of the wall (4) of the tank and **in that**, during insertion, the baffle (1, 2) is rotated essentially in one and the same plane and so that the axis of its offset part (1", 2") moves from a vertical position at the start of insertion, to a horizontal position in service.

15. - Process according to Claim 14, **characterized in that** a 2^{nd} baffle is introduced via an opening in the lower part of the wall of the tank, the two baffles being provided with complementary reliefs enabling them to be attached to one another.

## Patentansprüche

1. Verfahren zum Fertigen eines Kraftstofftanks, der mit einer Geräuschminderungsblende (1, 2; 12) ausgestattet ist, die einen Befestigungsteil (1', 2'; 12') und einen Versetzungsteil (1", 2"), die beide aus einem nicht zusammendrückbaren Werkstoff hergestellt sind, umfasst, wobei das Verfahren die folgenden Schritte umfasst:
- es wird ein Kraftstofftank, der eine Wand (4) umfasst, gefertigt,
- es wird eine Öffnung (6) in dieser Wand (4) hergestellt,
- durch diese Öffnung (6) wird die Blende (1, 2; 12) in den Tank eingeführt,
- die Blende (1, 2; 12) wird über ihren Befestigungsteil (1', 2'; 12') an der Wand (4) des Tanks befestigt, wobei,
wenn die Blende (1, 2; 12) in den Tank eingeführt wird, sie (1, 2; 12) gedreht werden muss, um dazu in der Lage zu sein, durch die Öffnung (6) hindurchzugehen,
wobei dieses Verfahren **dadurch gekennzeichnet ist, dass** der Befestigungsteil (1', 2'; 12') ein Ende hat, das dazu verwendet wird, die Blende (1, 2; 12) an dem Tank um die Öffnung (6), durch welche die Blende eingesetzt wurde, zu befestigen, dadurch, dass ein Vorsprung des Versetzungsteils (1", 2") an der Wand (4) des Tanks, welche die Öffnung (6) umfasst, wenigstens teilweise außerhalb der Öffnung (6) angeordnet ist, dadurch, dass der Versetzungs- und der Befestigungsteil (1', 2'; 12') zusammen einen festgelegten Winkel beschreiben, und dadurch, dass die Blende eine festgelegte Größe und Form aufweist.

2. Verfahren nach dem vorhergehenden Anspruch, wobei die Blende (1, 2; 12) und der Tank auf dem gleichen Kunststoff oder auf miteinander verträglichen Kunststoffen beruhen.

3. Verfahren nach einem der vorhergehenden Ansprüche, wobei die Blende (1, 2; 12) im Wesentlichen die Form einer Bahn aufweist, die zwei Hauptflächen aufweist, die parallel sind und die über eine Kante, die im Wesentlichen senkrecht zu denselben ist, miteinander verbunden sind.

4. Verfahren nach dem vorhergehenden Anspruch, wobei die Bahn Löcher oder Perforationen (13) aufweist, um den Durchgang von Kraftstoff zu ermöglichen.

5. Verfahren nach einem der Ansprüche 3 und 4, wobei die Bahn eine Bahn aus einem einzigen Werkstoff in einem Stück geformt ist und ihre Hauptflächen in dem Versetzungs-und dem Befestigungsteil (1', 2'; 12') aufweist:
- entweder in Ebenen, die einen Winkel zwischen denselben definieren, wobei die Bahn eine spiralige Form beschreibt,
- oder in ein und derselben Ebene, wobei die Bahn eine gebogene Form aufweist.

6. Verfahren nach einem der vorhergehenden Ansprüche, **dadurch gekennzeichnet, dass** der Teil der Blende (1, 2; 12), der im Grunde das Geräusch dämpft, der Versetzungsteil (1", 2") ist, und dadurch, dass sie in dem Tank mit ihren Hauptflächen senkrecht zu der Bewegung des Kraftstoffs unter Berücksichtigung der Art, in welcher der Tank in dem Fahrzeug angebracht sein wird, angeordnet wird.

7. Verfahren nach einem der vorhergehenden Ansprüche, **dadurch gekennzeichnet, dass** der Tank aus einem Vorformling geformt wird, und dadurch dass die Öffnung (6) während des Formens kraft einer in die Form eingeschlossenen Einrichtung hergestellt wird.

8. Verfahren nach dem vorhergehenden Anspruch, wobei die Form einen beweglichen Teil umfasst, der mit einem scharfen rechteckigen oder länglichen Relief versehen ist, das örtlich auf den Vorformling presst, bis die Öffnung in demselben geschnitten ist, wobei dieses scharfe Relief durch eine Fläche umschlossen wird, die eine rechteckige oder längliche Rippe (8) umfasst, welche die Kanten der Öffnung umschließt, während ein Werkstoffring (9) hinterlassen wird, an dem eine Befestigungsplatte (3), die am Ende des Befestigungsteils (1', 2'; 12') der Blende befestigt ist, aufliegen wird.

9. Verfahren nach dem vorhergehenden Anspruch, **dadurch gekennzeichnet, dass**, wenn eine einzelne Blende (1, 2; 12) über die Öffnung (6) eingesetzt und am Umfang derselben befestigt wird, diese Platte (3) die Öffnung (6) vollständig bedecken wird, und wenn zwei oder mehr Blenden (1, 2; 12) über die Öffnung (6) eingesetzt und am Umfang derselben befestigt werden, deren Platten komplementäre Formen und Abmessungen haben, die es ermöglichen, dass der Satz von Platten (3) die Öffnung (6) abdichtet.

10. Verfahren nach dem vorhergehenden Anspruch, **dadurch gekennzeichnet, dass** die Platte oder Platten (3) durch Schweißen an der Wand (4) des Tanks befestigt werden, und/oder dadurch, dass eine Bahn über der/den Platte(n) befestigt und an die Rippe (8) geschweißt wird.

11. Verfahren nach einem der vorhergehenden Ansprüche, **dadurch gekennzeichnet, dass** die Blende (12) spiralig ist, dadurch, dass die Öffnung (6) in einem seitlichen Teil der Wand des Tanks hergestellt wird, wobei der seitliche Teil im Wesentlichen senkrecht ist, wenn der Tank in dem Fahrzeug angebracht ist, dadurch, dass diese Öffnung eine längliche Form aufweist, deren lange Achse im Wesentlichen horizontal ist, wenn der Tank in dem Fahrzeug angebracht ist, und dadurch, dass, während des Einsetzens, die Blende (12) derart gedreht wird, dass sich ihr Versetzungsteil von einer horizontalen Stellung zu einer vertikalen Stellung im Einsatz bewegt.

12. Verfahren nach dem vorhergehenden Anspruch, **dadurch gekennzeichnet, dass** das freie Ende der Blende (12) in ihrem Versetzungsteil eine Aussparung umfasst, die mit einem Relief eines an dem Tank befestigten Bauteils zusammenpassen wird.

13. Verfahren nach dem vorhergehenden Anspruch, **dadurch gekennzeichnet, dass** der Tank einen Berührungspunkt (14) umfasst, und dadurch, dass die Aussparung bogenförmig einen Teil des Berührungspunkts (14) umschließt.

14. Verfahren nach einem der Ansprüche 1 bis 10, **dadurch gekennzeichnet, dass** die Blende (1, 2) flach und gebogen ist, dadurch, dass sie über eine Öffnung (6) im oberen Teil der Wand (4) des Tanks eingeführt wird, und dadurch, dass, während des Einsetzens, die Blende (1, 2) im Wesentlichen in ein und derselben Ebene und so gedreht wird, dass sich die Achse ihres Versetzungsteils (1", 2") von einer vertikalen Stellung beim Beginn des Einsetzens zu einer horizontalen Stellung im Einsatz bewegt.

15. Verfahren nach Anspruch 14, **dadurch gekennzeichnet, dass** eine 2. Blende über eine Öffnung im unteren Teil der Wand des Tanks eingeführt wird, wobei die zwei Blenden mit komplementären Reliefs versehen sind, die sie in die Lage versetzen, aneinander befestigt zu werden.

## Revendications

1. Procédé de fabrication d'un réservoir de carburant équipé d'une chicane de réduction de bruit (1, 2 ; 12) comportant une partie de fixation (1', 2' ; 12') et une partie décalée (1", 2"), ces deux parties étant faites en un matériau incompressible, ledit procédé comprenant les étapes suivantes :
- un réservoir de carburant comportant une paroi (4) est fabriqué ;
- une ouverture (6) est faite dans cette paroi (4) ;
- à travers cette ouverture (6), la chicane (1, 2 ; 12) est introduite dans le réservoir ;
- la chicane (1, 2 ; 12) est attachée à la paroi (4) du réservoir au moyen de sa partie de fixation (1', 2' ; 12') ; ce qui fait que
- lorsque la chicane (1, 2 ; 12) est introduite dans le réservoir, il faut la (1, 2 ; 12) tourner de façon à ce qu'elle puisse passer à travers l'ouverture (6) ;
ce procédé étant **caractérisé en ce que** la partie de fixation (1', 2' ; 12') a une extrémité qui est utilisée pour attacher la chicane (1, 2 ; 12) au réservoir autour de l'ouverture (6) à travers laquelle la chicane a été insérée, **en ce qu'**une projection de la partie décalée (1", 2") sur la paroi (4) du réservoir comportant l'ouverture (6) est située au moins partiellement à l'extérieur de ladite ouverture (6), **en ce que** la partie décalée et la partie de fixation (1', 2' ; 12') décrivent ensemble un angle fixe, et **en ce que** la chicane a une taille et une forme fixes.

2. Procédé selon la revendication précédente, dans lequel la chicane (1, 2 ; 12) et le réservoir sont basés sur le même plastique ou sur des plastiques compatibles.

3. Procédé selon l'une quelconque des revendications précédentes, dans lequel la chicane (1, 2 ; 12) a essentiellement la forme d'une feuille ayant deux surfaces principales qui sont parallèles et qui sont jointes ensemble au moyen d'un bord qui est généralement perpendiculaire à celles-ci.

4. Procédé selon la revendication précédente, dans lequel la feuille a des trous ou des perforations (13) pour permettre le passage de carburant.

5. Procédé selon l'une quelconque des revendications 3 et 4, dans lequel la feuille est une feuille en un seul matériau, moulée en une seule pièce et qui a ses surfaces principales dans la partie décalée et la partie de fixation (1', 2' ; 12') :
- soit dans des plans qui définissent un angle entre eux, la feuille décrivant une forme hélicoïdale ;
- soit dans un et même plan, la feuille ayant une forme fléchie.

6. Procédé selon l'une quelconque des revendications précédentes, **caractérisé en ce que** la partie de la chicane (1, 2 ; 12) qui atténue essentiellement le bruit est la partie décalée (1", 2") et **en ce qu'**elle est positionnée dans le réservoir avec ses surfaces principales perpendiculaires au mouvement du carburant en considérant la façon dont le réservoir sera monté dans le véhicule.

7. Procédé selon l'une quelconque des revendications précédentes, **caractérisé en ce que** le réservoir est moulé à partir d'une paraison et **en ce que** l'ouverture (6) est faite pendant le moulage en vertu d'un dispositif incorporé dans le moule.

8. Procédé selon la revendication précédente, dans lequel le moule comporte une partie mobile pourvue d'un relief rectangulaire ou oblong affilé qui presse localement sur la parison jusqu'à ce que l'ouverture soit coupée dans celle-ci, ce relief affilé étant entouré d'une surface comportant une nervure rectangulaire ou oblongue (8), entourant les bords de l'ouverture tout en laissant un anneau de matériau (9) sur lequel reposera une plaque de fixation (3) attachée à l'extrémité de la partie de fixation (1', 2' ; 12') de la chicane.

9. Procédé selon la revendication précédente, **caractérisé en ce que**, lorsqu'une seule chicane (1, 2 ; 12) est insérée par le périmètre de l'ouverture (6) et attachée à celui-ci, cette plaque (3) couvrira complètement l'ouverture (6), et lorsque deux chicanes (1, 2 ; 12) ou plus sont introduites par le périmètre de l'ouverture (6) et attachées à celui-ci, leurs plaques auront des formes et des dimensions complémentaires permettant à ce jeu de plaques (3) d'obturer ladite ouverture (6) de façon étanche.

10. Procédé selon la revendication précédente, **caractérisé en ce que** la plaque ou les plaques (3) sont attachées à la paroi (4) du réservoir par soudage et/ou en ce qu'une feuille est fixée au-dessus de la ou des plaque(s) et soudée à la nervure (8).

11. Procédé selon l'une quelconque des revendications précédentes, **caractérisé en ce que** la chicane (12) est hélicoïdale, **en ce que** l'ouverture (6) est faite dans une partie latérale de la paroi du réservoir, ladite paroi latérale étant essentiellement verticale lorsque le réservoir est monté dans le véhicule, **en ce que** cette ouverture a une forme allongée dont l'axe long est essentiellement horizontal lorsque le réservoir est monté dans le véhicule et **en ce que**, pendant l'insertion, la chicane (12) est tournée de manière à ce que sa partie décalée passe d'une position horizontale à une position verticale en service.

12. Procédé selon la revendication précédente, **caractérisé en ce que** l'extrémité libre de la chicane (12) dans sa partie décalée comporte un évidement qui coopérera à un relief ou à un élément attaché au réservoir.

13. Procédé selon la revendication précédente, **caractérisé en ce que** le réservoir comporte un point de contact (14) et **en ce que** l'évidement est en forme d'arc encerclant une partie de ce point de contact (14).

14. Procédé selon l'une quelconque des revendications 1 à 10, **caractérisé en ce que** la chicane (1, 2) est plate et fléchie, **en ce qu'**elle est introduite par une ouverture (6) dans la partie supérieure de la paroi (4) du réservoir et **en ce que**, pendant l'insertion, la chicane (1, 2) est tournée essentiellement dans un et même plan et de façon à ce que l'axe de sa partie décalée (1", 2") passe d'une position verticale au début de l'insertion à une position horizontale en service.

15. Procédé selon la revendication 14, **caractérisé en ce qu'**une deuxième chicane est introduite par une ouverture dans la partie inférieure de la paroi du réservoir, les deux chicanes étant pourvues de reliefs complémentaires leur permettant d'être attachées l'une à l'autre.
